# EUROPÄISCHE PATENTSCHRIFT

(11) **EP 1 520 809 B1**
(45) Veröffentlichungstag und Bekanntmachung des Hinweises auf die Patenterteilung: **12.08.2009**
(21) Anmeldenummer: 04020542.9
(22) Anmeldetag: 30.08.2004
(51) Int. Cl.: B65G 17/26, B65B 59/00, B65B 43/46

(54) **Fördervorrichtung und Verfahren zur Anpassung an unterschiedliche Behälterformate**
Conveyor and method for adjusting to different sized containers
Convoyeur et méthode d'ajustement à des conteneurs de tailles différentes

(30) Priorität: 29.08.2003 DE 10340270
(43) Veröffentlichungstag der Anmeldung: 06.04.2005
(73) Patentinhaber: Robot Food Technologies Germany GmbH, 29323 Wietze (DE)
(72) Erfinder: Grüne, Helmut, 29690 Schwarmstedt (DE); Frerichs, Hajo, 29690 Schwarmstedt (DE)
(74) Vertreter: Heldt, Gert

(56) Entgegenhaltungen:
- EP-A- 0 286 514
- EP-A- 0 903 291
- US-A- 3 857 474
- US-A- 5 238 101

## Beschreibung

Die Erfindung betrifft ein Verfahren zum Anpassen einer zum Fördern von Behältern vorgesehenen Fördervorrichtung an unterschiedliche Behälterformate, bei dem jedem Behälter mindestens zwei in eine dem Behälter angepasste Position gegeneinander verfahrbahre Halterungen zugeordnet werden, von denen jede von mindestens einer Gliederkette geführt wird.

Darüber hinaus betrifft die Erfindung eine Vorrichtung zum Anpassen einer zum Befördern von Behältern vorgesehenen Fördervorrichtung an unterschiedliche Behälterformate mit mindestens zwei unabhängig voneinander verfahrbaren Halterungen, die in ihrer Lage einem zu transportierenden Behälter entsprechend von mindestens einer mit je einer Halterung verbundenen Gliederkette zueinander positionierbar sind.

Behälter mit sehr voneinander unterschiedlichen Abmessungen werden zum Verpacken von Waren aller Art, insbesondere von Fertiggerichten und anderen Lebensmitteln eingesetzt. Derartige Behälter werden im leeren Zustand auf eine Fördervorrichtung aufgesetzt, die die leeren Behälter zu einer Füllmaschine verfahren, mit der die leeren Behälter mit dem zu verpackenden Gut befüllt werden. Nach dem Befüllen der Behälter werden die befüllten Behälter im Bereich ihrer Einfüllöffnung verschlossen. Dazu können unterschiedliche Verschlußarten gewählt werden, beispielsweise auf den Behälter auflegbare und mit diesem fest verbundene widerstandsfähige Folien. Außer weiteren Verschlußarten sind insbesondere auf dem Behälter klemmende Deckel üblich, die auf einen die Einfüllöffnung des Behälters umschließenden Rand, der für diese Zwecke besonders geeignet ist, fest aufgedrückt werden. Derartige Druckdeckel verschließen die Einfüllöffnung formschlüssig.

Aus der EP-A-0 286 514 ist ein Verfahren und eine Vorrichtung zum anpassen einer zum fördern von Behältern vorgesehenen Fördervorrichtung an unterschiedliche Behälterformate bekannt. Diese Fördervorrichtung besitzt einen Stößel zum öffnen und schließen von halteplatten, durch deren Verschwenken sich aufnahmen vergrößern bzw. verkleinern lassen, sodass innerhalb der Aufnahmen runde Behälter entnommen werden können. Dabei müssen die Bewegungen des Stößels genau auf einen Vorschub von Ketten abgestimmt sein. Diese Abstimmung führt zu erheblichen Schwierigkeiten. Dabei spielen einerseits die erheblichen Massen eine Rolle, die für die Bewegung des Stößels in Bewegung gesetzt werden müssen. Zum anderen müssen auch die Bewegungungen der Ketten genau berücksichtigt werden. Diese durfen sich nicht längen. Vielmehr muss ihr lauf gewährleisten, dass sie den Takt berücksichtigen können, der von dem oberen ende des Stößels vorgegeben ist.

Aufgabe der vorliegenden Erfindung ist es daher, die Fördervorrichtung auf möglichst schnelle und billige Art einem jeweils gewünschten Behälterformat anpassen zu können.

Diese Aufgabe wird erfindungsgemäß vom Verfahren dadurch gelöst, dass die Halterungen an die Gliederketten durch verschwenkbar gelagerte Kopplungsglieder ab- bzw. angekoppelt werden, die um einen über eine äußere Begrenzung der Gliederketten hinausragende Gliederbolzen verschwenkt wird und dabei die mit den Kopplungsgliedern jeweils verbundene Halterung vom jeweiligen Behälter weg bzw. zu ihm hin verschwenkt wird.

Durch diese unmittelbar mit den Ketten verbundenen Kopplungsglieder wird erreicht, dass das Verschwenken der Halterungen nur noch abhängig ist vom Lauf und der Stellung des jeweiligen Kettentriebs. Da die Kettentriebe ein etwa gleiches Laufverhalten aufweisen, kommt eine sehr exakte Steuerung der Halterungen und damit eine An - bzw. Abkopplung der Behälter zustande. Dabei wird bei als Gliederketten ausgebildeten Fördermitteln ein Kopplungsglied verwendet, das um einen über eine äußere Begrenzung der Gliederkette hinausragenden Gliederbolzen verschwenkt wird. Ein solches Kopplungsglied kann verschwenkbar an einer serienmäßig mit einem Gliederbolzen versehenen Gliederkette verschwenkbar gelagert werden.

Hinsichtlich der Vorrichtung wird die Aufgabe dadurch gelöst, dass jede Halterung über jeweils mindestens ein verschwenkbar gelagertes Kopplungsglied mit der ihr zugeordneten Gliederkette verbunden ist, aus deren äußerer Begrenzung ein Gliederbolzen herausragt, auf dem das Kopplungsglied von einer die Halterung an den Behälter ankoppelnden Stellung in eine abkoppelnde.Stellung und aus dieser wieder in die ankoppelnde Stellung verschwenkbar gelagert ist.

Durch diese Gestaltung der Vorrichtung ist eine sehr genaue Steuerung der An- bzw. Abkopplungsvorgänge möglich. Dabei ist besonders zu beachten, dass diese Exaktheit der Steuerungsvorgänge unabhängig von dem jeweils zum Einsatz kommenden Behälterformat ist. Da der Abstand der Halterung, die den Behälter in seinem vorderen Bereich unterstützt, von der Halterung, die den Behälter in seinem in Fahrtrichtung hinteren Bereich unterstützt, durch Verfahren der Kettenpaarungen entsprechend der Größe des jeweiligen Behälters genau festgelegt werden kann, wird durch diese genaue Festlegung auch die Lage der Kopplungsglieder zueinander genau festgelegt, sodass für jedes Behälterformat für eine exakte Steuerung der An - bzw. Abkopplungsvorgänge gesorgt ist.

Gemäß einer bevorzugten Ausführungsform der Erfindung wird der Behälter entlang von zwei ihn begrenzenden Wandungen von den Halterungen abgestützt. Durch diese Maßnahme erhalten die Wandungen die von ihnen erwartete hohe Steifigkeit, so dass sie in der Lage sind, den beim Verschließen notwendigen Druck aufzunehmen.

Gemäß einer weiteren bevorzugten Ausführungsform der Erfindung werden die Halterungen zur Anpassung an Abmaße eines jeweils zu transportierenden Behälters in einer vom Behälter innerhalb der Fördervorrichtung eingehaltenen Förderrichtung gegeneinander verfahren. Für diese Art der Anpassung werden keine besonderen konstruktiven Mittel eingesetzt sondern die für den Transport des Behälters notwendigen Mittel für die Anpassung an das jeweils gewünschte Behälterformat verwendet. Im Regelfall wird eine der beiden einem Behälter zugeordneten Halterungen in die eine Richtung und die andere in die entgegengesetzte Richtung soweit verfahren, bis ein bestimmter Behälter zwischen den beiden Halterungen plaziert und abgestützt werden kann. Mit diesem Abstand sind dann sämtliche jeweils einem Behälter zugeordnete Halterungen der Fördervorrichtung voneinander entfernt, so daß die jeweils zu befüllenden Behälter auf den einander zugeordneten Halterungen plaziert werden können. Durch das Verfahren der einander zugeordneten Halterungen um jeweils das gleiche Stück in zwei einander entgegengesetzte Richtungen, wird bezüglich aller hintereinander in der Fördervorrichtung angeordneten Behälter unabhängig von deren Gestaltung der gleiche Abstand eingehalten. Der Bezugspunkt einer jeden Paarung von Halterungen ändert sich durch das Verschieben der Halterungen nicht. Der gewählte Abstand der Halterungen voneinander wird während der Förderung eines bestimmten Behältertyps beibehalten.

Gemäß einer weiteren bevorzugten Ausführungsform der Erfindung wird jede der einander zugeordneten Halterungen von mindestens einem Fördermittel geführt, von denen die Behälter durch die Fördervorrichtung transportiert werden. Auch auf diese Weise wird eine gesonderte Ausbildung der Fördervorrichtung zum Zwecke der Anpassung an unterschiedliche Behälterformate eingespart.

Gemäß einer weiteren bevorzugten Ausführungsform der Erfindung wird der Behälter mit einer in Richtung auf seinen Boden verfahrbaren Platte abgestützt, auf der der Boden gelagert wird. Auf diese Weise erhält der Behälter eine Lagerung, die ausreichend groß bemessen ist, um die Halterungen vom Behälter weg zu schwenken und sie auf diese Weise vor einer Verformung durch Einwirken der Verschließdrucke zu bewahren.

Gemäß einer weiteren bevorzugten Ausführungsform der Erfindung wird der Behälter nach Wegschwenken der Halterungen in einer ihn umgebenden biegesteifen Abstützung abgestützt, deren oberer Abschluß bis zu dem die Einfüllöffnung des Behälters umgebenden Bund angehoben wird. Durch diese biegesteife Abstützung werden auch die Wandungen des Behälters von dem zu erwartenden Verschließdruck geschützt, der aufgebracht werden muss, um den Behälter sachgerecht zu verschließen.

Die gestellte Aufgabe wird gemäß einer weiteren bevorzugten Ausführungsform der Erfindung durch eine Vorrichtung gelöst, bei der jede Halterung über jeweils ein verschwenkbar gelagertes Kopplungsglied mit der ihr zugeordneten Gliederkette verbunden ist, aus deren äußeren Begrenzungen ein Gliederbolzen herausragt, auf dem das Kopplungsglied von einer die Halterung an den Behälter ankoppelnden Stellung in eine abkoppelnde Stellung und aus dieser wieder in die ankoppelnde Stellung verschwenkbar gelagert ist.

Durch diese Gestaltung der Vorrichtung ist eine sehr genaue Steuerung der An- bzw. Abkopplungsvorgänge möglich. Dabei ist besonders zu beachten, dass diese Exaktheit der Steuerungsvorgänge unabhängig von dem jeweils zum Einsatz kommenden Behälterformat ist. Da der Abstand der Halterung, die den Behälter in seinem vorderen Bereich unterstützt, von der Halterung, die den Behälter in seinem in Fahrtrichtung hinteren Bereich unterstützt, durch Verfahren der Kettenpaarungen entsprechend der Größe des jeweiligen Behälters genau festgelegt werden kann, wird durch diese genaue Festlegung auch die Lage der Kopplungsglieder zueinander genau festgelegt, sodass für jedes Behälterformat für eine exakte Steuerung der An - bzw. Abkopplungsvorgänge gesorgt ist. Mithilfe dieser Vorrichtung kann durch eine bloße Lageveränderung der Halterungen zueinander die Anpassung an ein jeweils zu befüllendes Behälterformat vorgenommen werden.

Weitere Einzelheiten der Erfindung ergeben sich aus den nachfolgenden ausführlichen Beschreibungen und den beigefügten Zeichnungen, bei denen eine Vorrichtung zur Durchführung des erfindungsgemäßen Verfahrens beispielhaft dargestellt ist.

In den Zeichnungen zeigen:

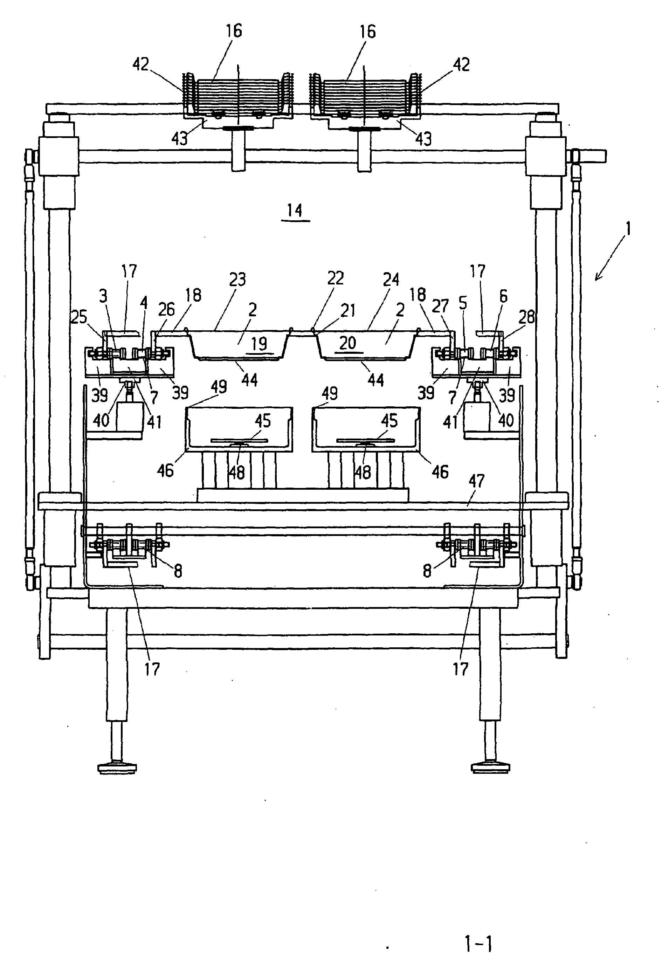

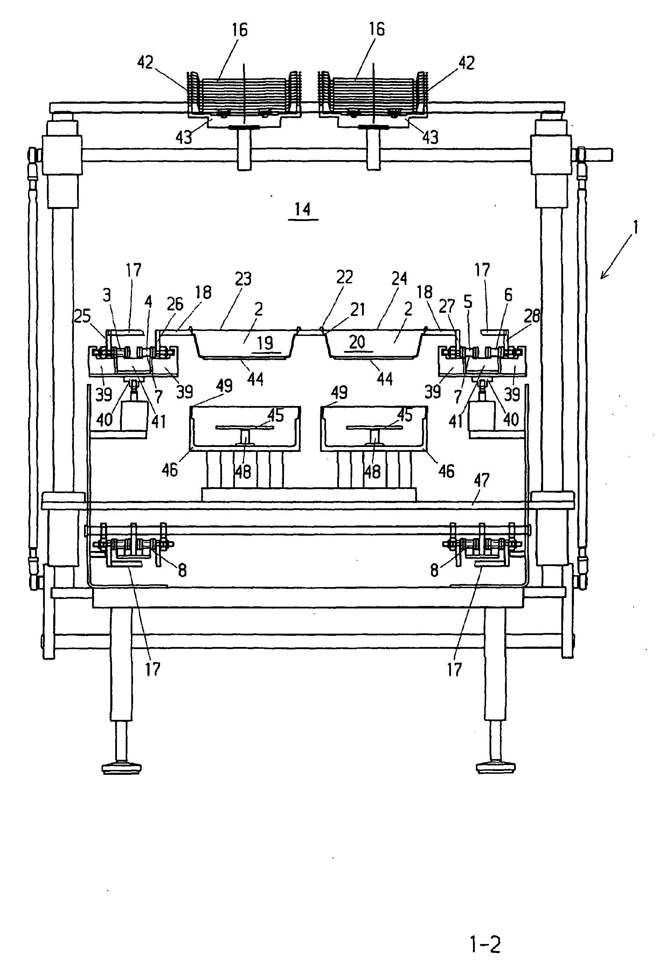

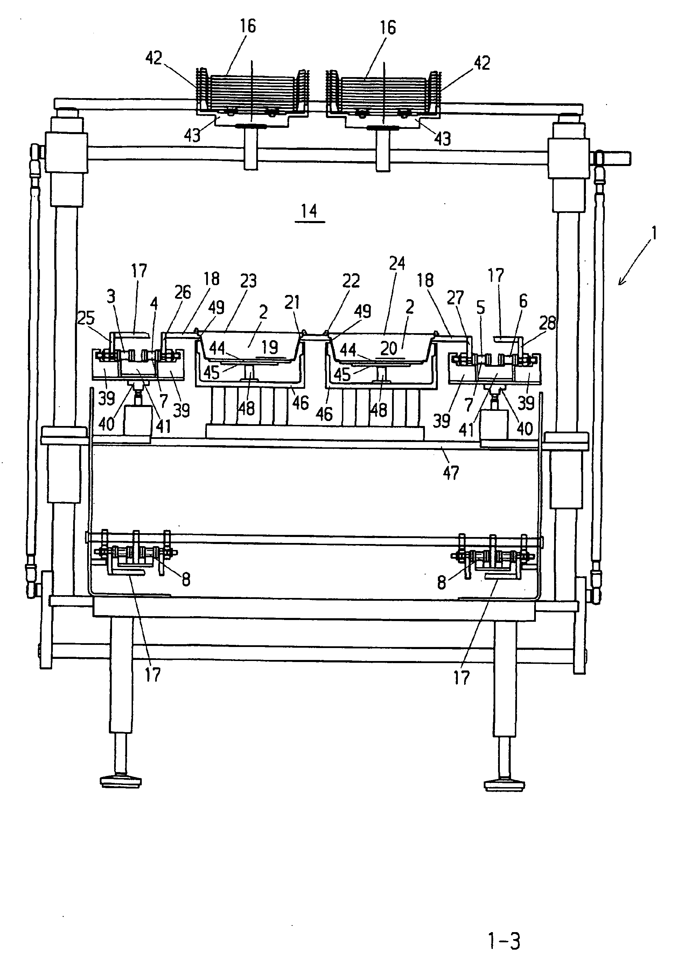

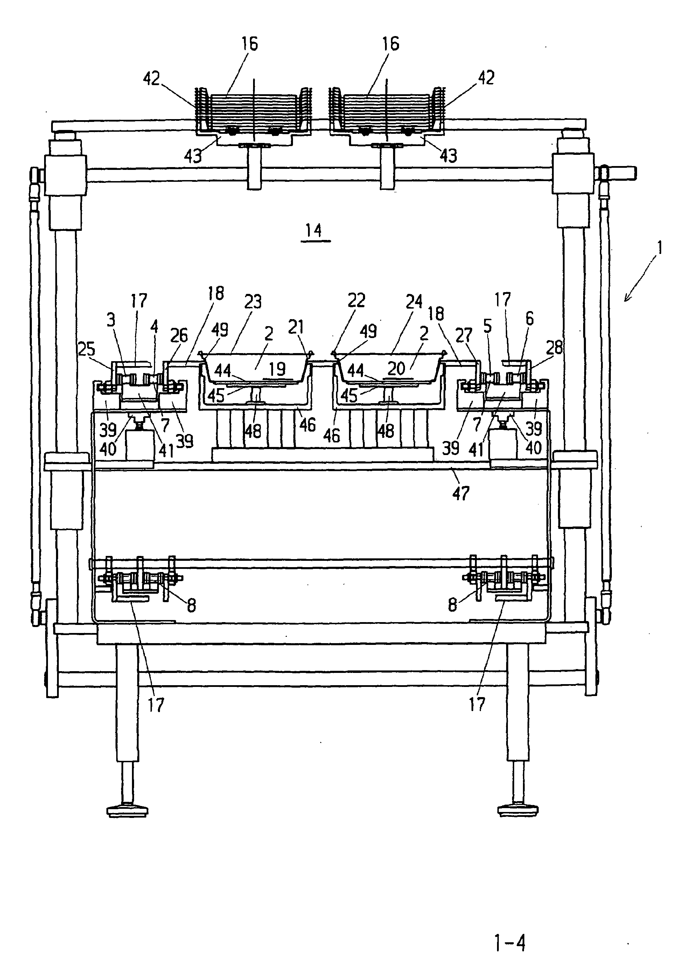

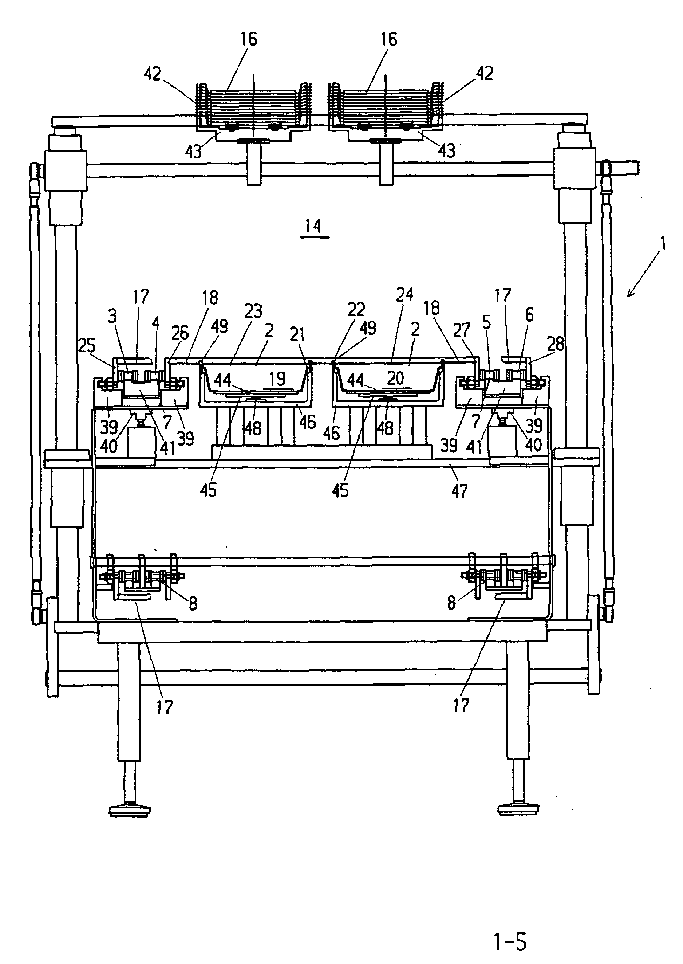

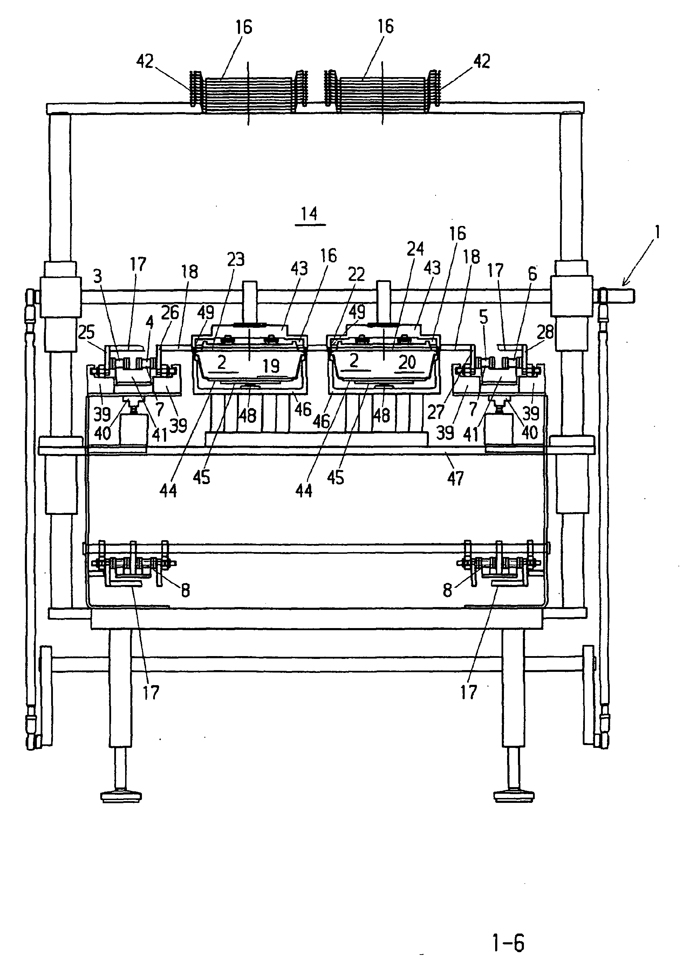

- Figur 1 - 1: Einen Querschnitt durch eine Vorrichtung im Bereich einer Verdeckelstation mit abgesenkter Platte und abgesenkter Abstützung,
- Figur 1 - 2: einen Querschnitt durch eine Vorrichtung im Bereich einer Verdeckelstation mit angehobener Platte,
- Figur 1 - 3: einen Querschnitt durch eine Vorrichtung im Bereich einer Verdeckelstation mit angehobener Platte und angehobener Abstützung,
- Figur 1 - 4: Querschnitt durch eine Vorrichtung im Bereich einer Verdeckelstation mit abgesenkten Halterungen,
- Figur 1 - 5: Querschnitt durch eine Vorrichtung im Bereich einer Verdeckelstation mit abgestütztem Behälter,
- Figur 1 - 6: Querschnitt durch eine Vorrichtung im Bereich der Verdekkelstation mit abgesenkter Verdeckeleinrichtung,
- Figur 2 - 1: Systemskizze einer Verdeckelstation mit zwei einander überschneidenden Bahnen von Kopplungsgliedern,
- Figur 2 - 2: Systemskizze einer Verdeckelstation mit zwei einander überschneidenden Bahnen mit Kopplungsgliedern und angehobener Platte,

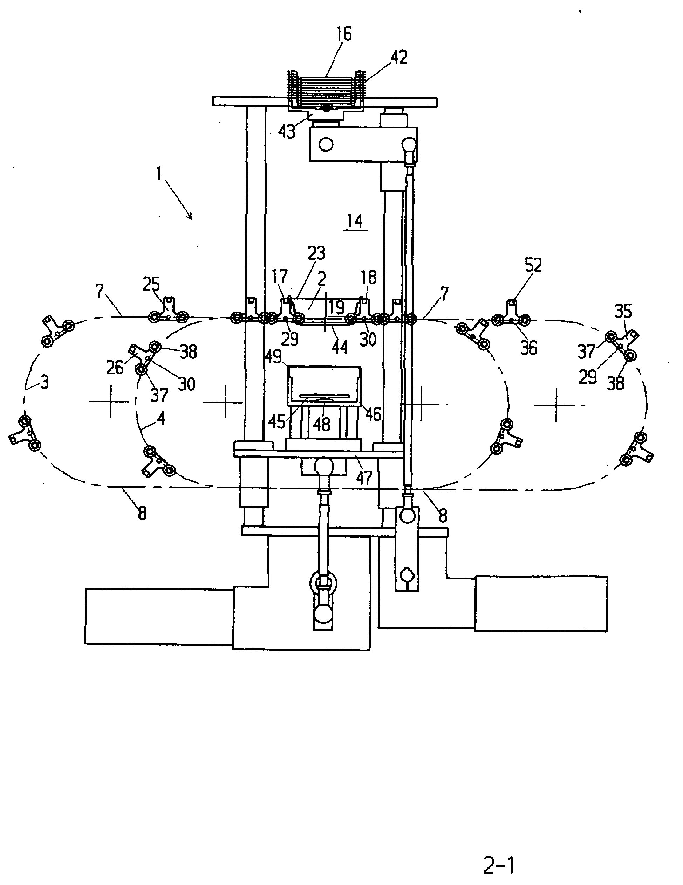

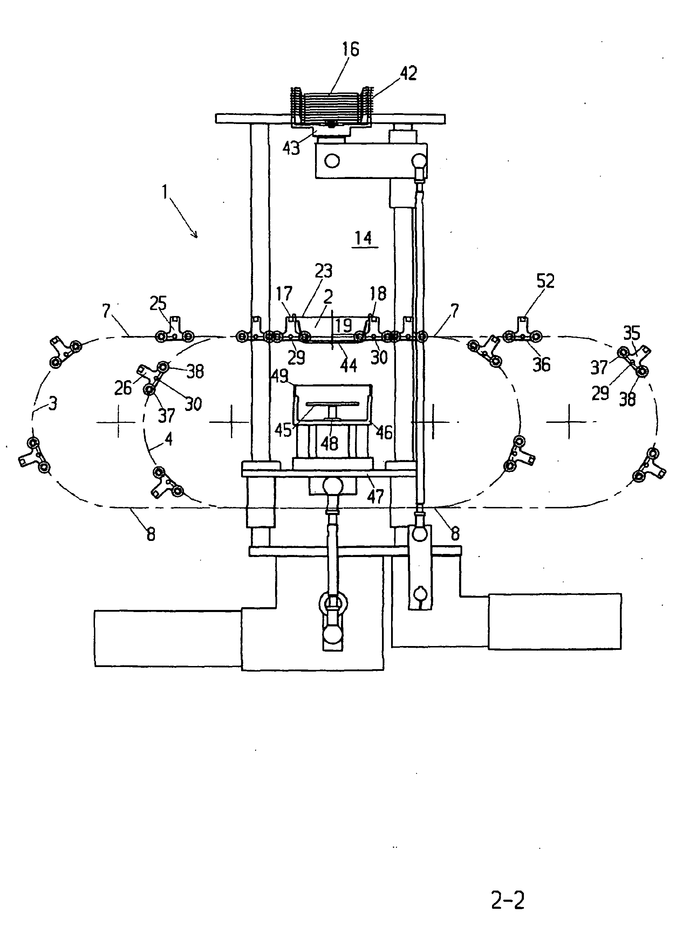

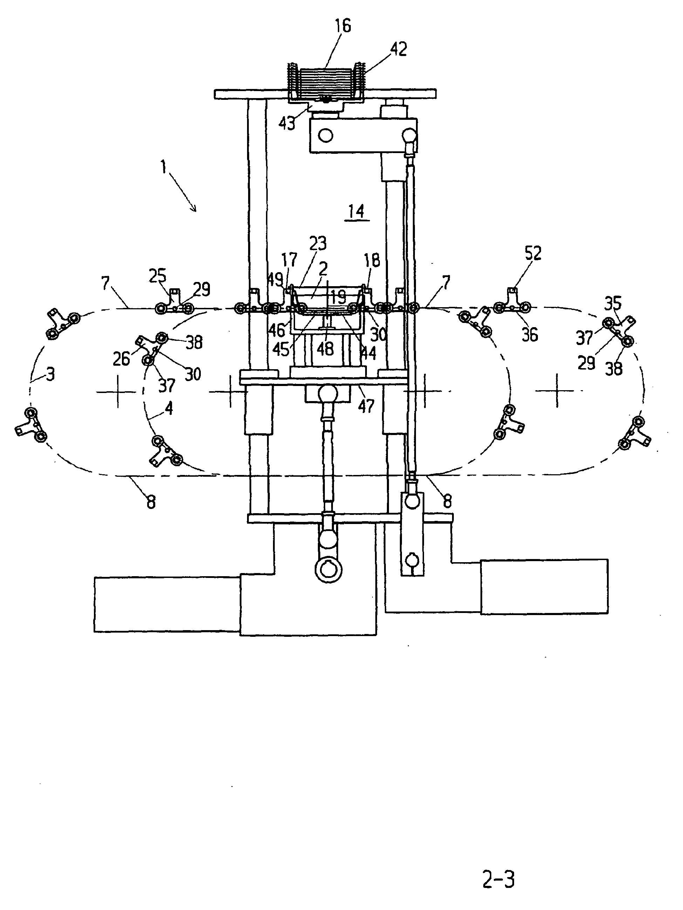

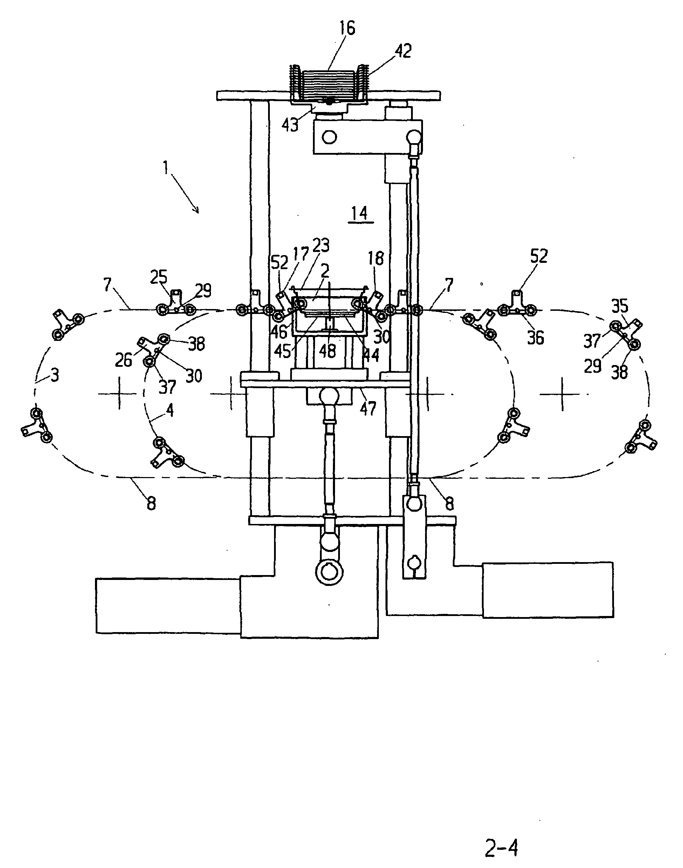

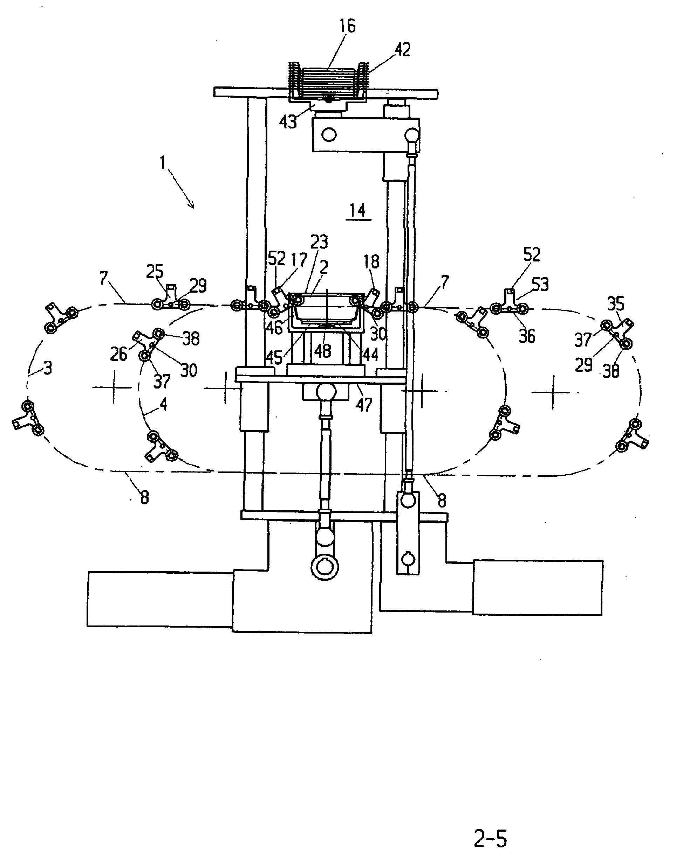

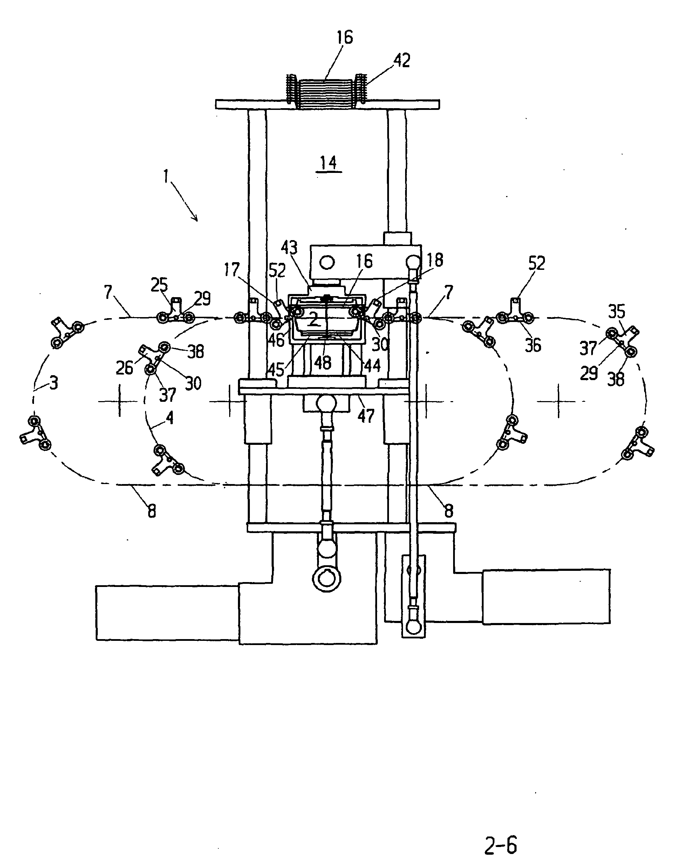

- Figur 2 - 3: Systemskizze einer Verdeckelstation mit zwei einander überschneidenden Bahnen von Kopplungsgliedern und angehobener Platte und angehobener Abstützung,
- Figur 2 - 4: Systemskizze einer Verdeckelstation mit verschwenkten Kopplungsgliedern und angehobener Platte und angehobener Abstützung,
- Figur 2 - 5: Systemskizze einer Verdeckelstation mit verschwenkten Kopplungsgliedern sowie durch die Platte und die Abstützung abgestützten Behälter,
- Figur 2 - 6: Systemskizze einer Verdeckelstation mit verschwenkten Kopplungsstücken, durch die Platte und die Abstützung abgestützten Behälter sowie auf den Behälter abgesenkter Verdeckeleinrichtung,

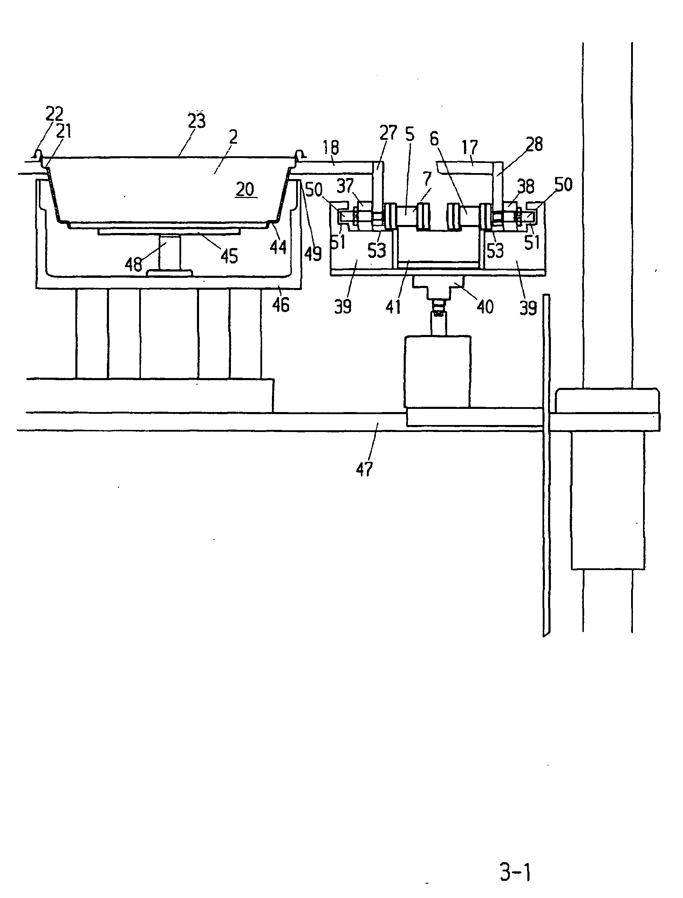

- Figur 3 - 1: Teilansicht einer einseitig am Behälter vorbei geführten Rollenbahn mit einem in den Halterungen hängenden Behälter,

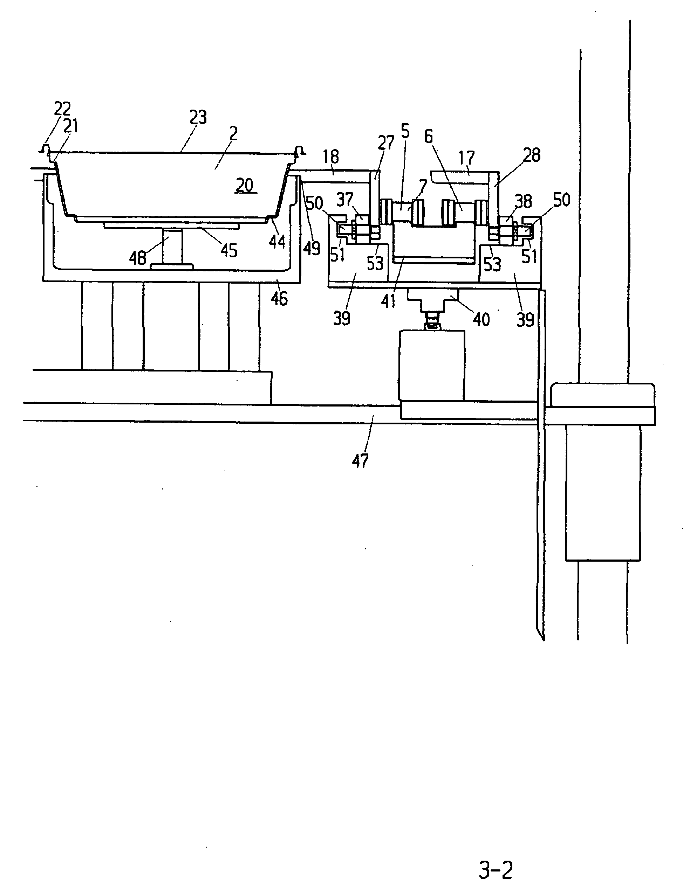

- Figur 3 - 2: Teilansicht einer einseitig am Behälter vorbei geführten Rollenbahn mit vom Behälter abgesenkten Halterungen,

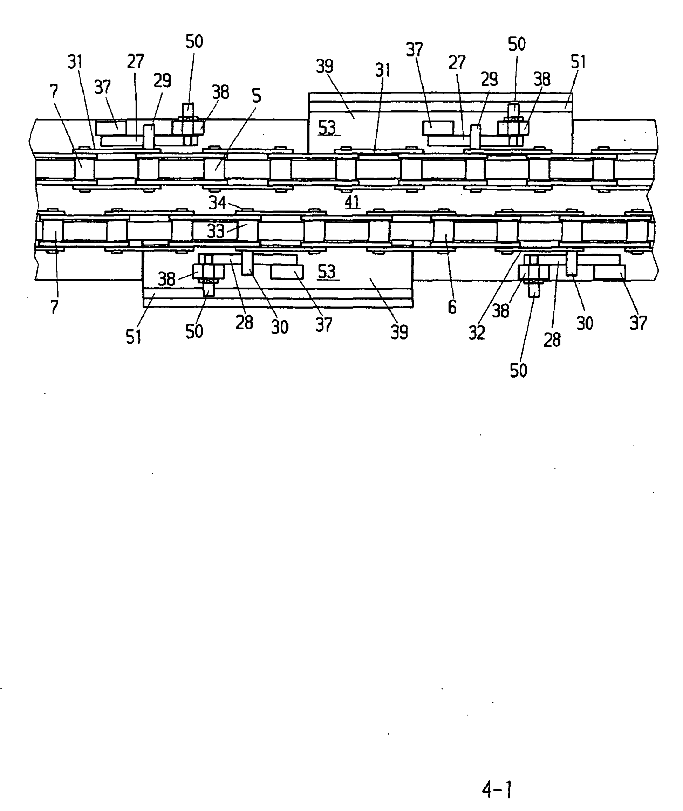

- Figur 4 - 1: Teilansicht von zwei einander parallel verlaufenden Ketten,

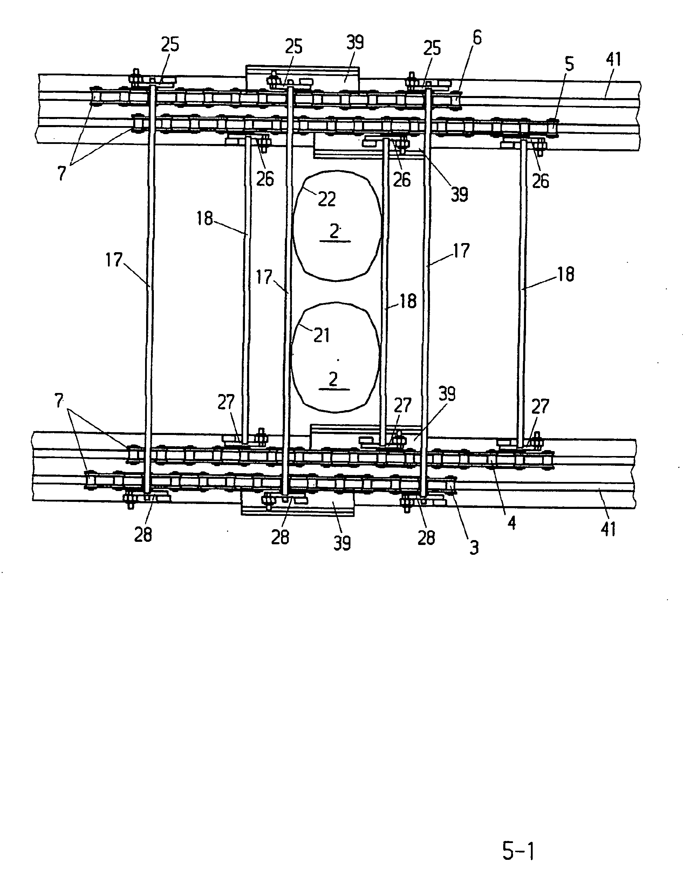

- Figur 5 - 1: eine Draufsicht auf eine Fördervorrichtung mit zwischen Halterungen eingehängten Behältern und

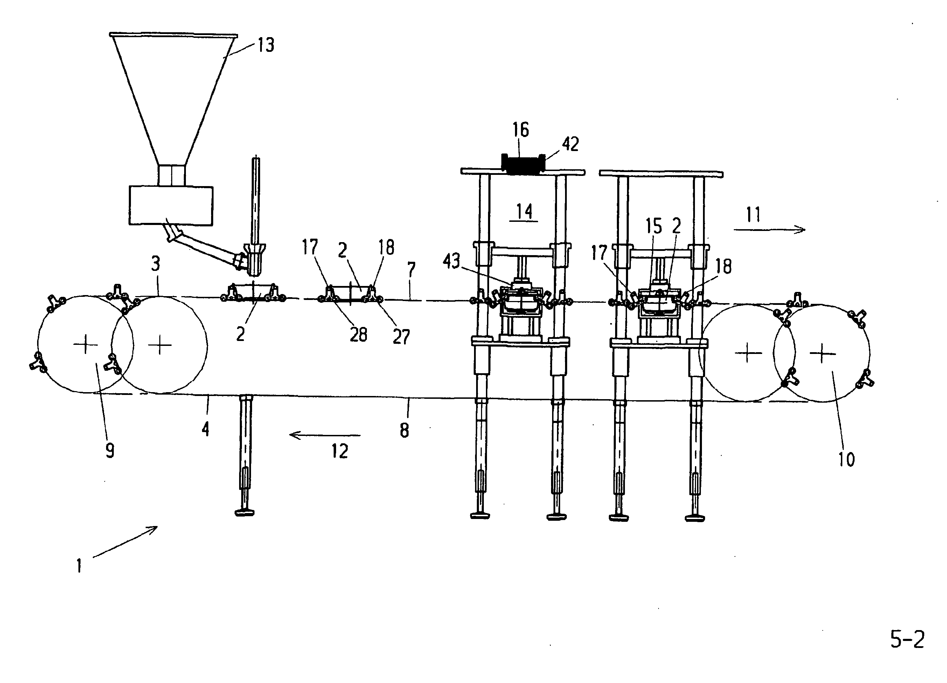

- Figur 5 - 2: eine Systemskizze einer Vorrichtung.

Eine Fördervorrichtung 1 für Behälter 2 besteht im wesentlichen aus 4 parallel verlaufenden Gliederketten 3, 4, 5, 6 mit jeweils einem Obertrum 7 und einem Untertrum 8. Die Gliederketten 3, 4, 5, 6 werden im Bereich von Umlenkscheiben 9, 10 umgelenkt, so dass der jeweilige Obertrum 7 in Förderrichtung 11 verläuft, während der Untertrum 8 in entgegengesetzter Richtung 12 verläuft.

Entlang der Fördervorrichtung 1 werden die Behälter 2 in verschiedene Stationen gefördert, beispielsweise in eine Füllstation 13, in der sie mit einer Ware, beispielsweise mit einem Lebensmittel befüllt werden und in eine Verdeckelstation 14, in der der befüllte Behälter 2 verschlossen, beispielsweise mit einem Deckel 16 versehen wird. In ähnlicher Weise wird auf den befüllten Behälter 2 gegebenenfalls in einer Siegelstation eine Verschlußfolie 15 aufgesiegelt. Auf dem Weg durch die Fördervorrichtung 1 wird der Behälter 2 in Halterungen 17, 18 gehalten. Diese können als Stangen ausgebildet sein, die sich zwischen einander zugeordneten Gliederketten erstrecken, beispielsweise zwischen den beiden außen laufenden Gliederketten 3, 6 bzw. zwischen den beiden innen laufenden Ketten 4, 5. Dabei ist der Abstand zwischen den beiden Halterungen 17, 18 so wählbar, dass zwischen ihnen die Behälter 2 unabhängig von deren äußerer Form hängen können, beispielsweise im Bereich ihrer Außenwandungen 19, 20 bzw. im Bereich eines Bundes 21, 22, der jeweils ihre Einfüllöffnungen 23, 24 umgibt.

Die Halterungen 17, 18 sind über Kopplungsglieder 25, 26, 27, 28 mit den Gliederketten 3, 4, 5, 6 verbunden. Zu diesem Zwekke besitzen die Gliederketten 3, 4, 5, 6 Gliederbolzen 29, 30, die jeweils aus einer äußeren Begrenzung 31, 32 in von einander abgewandte Richtungen jeweils von der benachbarten Gliederkette weg weisend herausragen. Auf diesen Gliederbolzen 29, 30, die als Verlängerung der durch jeweils eine Rolle 33 hindurch ragenden Achse 34 ausgebildet sind, ist das Kopplungsglied 25, 26, 27, 28 verschwenkbar gelagert. Dabei ist das Kopplungsglied 25, 26, 27, 28 in Form eines gleichschenkligen Dreiecks 35 ausgebildet, in dessen Basis 36 jeweils hintereinander zwei Rollen 37, 38 drehbar gelagert sind, die beim Transport der Gliederketten 3, 4, 5, 6 auf einer Ebene 53, die auf einem Fundament 39 gelagert ist, abrollen. Dieses Fundament 39 ist mit Hilfe eines pneumatischem Stempels 40 gegenüber eine Führung 41 der Gliederketten 3, 4, 5, 6 in der Höhe verstellbar angeordnet. Beim Absenken des Fundaments 39 werden die Halterungen 17, 18 verschwenkt.

Aufgrund der unmittelbaren Ankopplung der Halterung 17, 18 an die jeweiligen Gliederketten 3, 6 bzw. 4, 5 kann der Abstand zwischen zwei einander benachbarten Halterungen 17, 18 dadurch verändert werden, dass das eine Kettenpaar 3, 6 gegenüber dem anderen Kettenpaar 4, 5 bewegt wird. Dabei wird der Abstand zwischen den Halterungen 17, 18 größer, wenn bei in gleicher Richtung bewegten Kettenpaaren 3, 6 bzw. 4, 5 das nachfolgende Kettenpaar 4, 5 langsamer bewegt wird als das voranlaufende Kettenpaar 3, 6. Der Abstand wird kleiner, wenn bei in gleicher Richtung bewegten Kettenpaaren 3, 6 bzw. 4, 5 das nachfolgende Kettenpaar 4, 5 schneller bewegt wird als das vorlaufende Kettenpaar 3, 6. Der Abstand wird auch größer, wenn sich das eine Kettenpaar 3, 6 in die eine Richtung und das andere Kettenpaar 4, 5 in die andere Richtung bewegt.

Beim Versiegeln bzw. beim Aufdrücken eines Druckdeckels auf den Behälter 2 im Bereich der Verdeckelstation 14 wird der aus einem Magazin 42 von einem Druckstempel 43 entnommene Deckel bzw. eine entnommene Folie mit erheblichem Druck auf den Behälter 2 aufgesetzt, um diesen fest auf den Behälter 2 aufzusetzen. Dem dadurch auf den Behälter 2 einwirkenden Druck sind die Halterungen 17, 18 nicht gewachsen. Aus diesem Grunde muss der Behälter 2 während des Verschließens gut abgestützt werden. Zum Siegeln muß der Behälter immer abgestützt werden. Das gleiche gilt für das Aufsetzen von Druckdeckeln (weiche Becher).

Dazu ist eine in Richtung auf einen Boden 44 des Behälters 2 verschiebliche Platte 45 vorgesehen, die innerhalb einer Abstützung 46 in vertikaler Richtung verschieblich gelagert ist. Diese Platte 45 wird gemeinsam mit der Abstützung 46 durch Anheben einer Traverse 47 in Richtung auf den in den Halterungen 17, 18 hängenden Behälter 2 angehoben. Dabei ist die Platte 45 durch einen eigenen Antrieb 48 innerhalb der Abstützung 46 in vertikaler Richtung beweglich gelagert. Die Abstützung 46 ist als ein biegesteifer Kasten ausgebildet, auf dessen Oberbegrenzung 49 der Behälter 2 mit seinem Bund 21, 22 aufgelegt werden kann.

Bevor jedoch der Bund 21, 22 des Behälters 2 auf der oberen Begrenzung 49 abgelegt werden kann, muß der Behälter 2 von den Halterungen 17, 18 abgehoben werden, da diese den Bund 21, 22 so unterfassen, dass die Abstützung 46 beim Anheben nicht den Bund 21, 22 erreicht sondern nur die sich unterhalb des Bundes 21, 22 erstreckenden Halterungen 17, 18.

Zunächst muss daher der Behälter 2 von den Halterungen 17, 18 abgehoben werden, damit unterhalb des Bundes 21, 22 Platz genug für die Aufnahme der oberen Begrenzung 49 der Abstützung 46 ist. Zu diesem Zwecke sind zwei Schritte notwendig. Zum einen muß der Behälter 2 gegenüber der ihn abstützenden Halterung 17, 18 leicht angehoben werden und diese sodann vom Behälter 2 weggeschwenkt werden. Durch Abschwenken der Kupplungsglieder 25, 26, 27, 28 wird die Halterung 17, 18 vom Bund 21, 22 des Behälters 2 abgeschwenkt.

Der Behälter 2 wird durch die unter den Boden 44 gefahrene Platte 45 ein wenig angehoben, so dass er von den Halterungen 17, 18 frei kommt und diese verschwenkt werden können. Zu diesem Zwecke wird die Platte 45 innerhalb der Abstützung 46 bis zum Boden 44 des Behälters 2 angehoben, so dass die Platte 45 den Boden 44 abstützen und ein wenig anheben kann.

Sodann wird über den pneumatischen Stempel 40 das Fundament 39 und damit auch die Ebene 53 abgesenkt und damit auch die Halterungen 17, 18 aus ihrer Abstützung des Bundes 21, 22 verschwenkt. Dieser Vorgang ist in den Figuren 2 - 4 und 2 - 5 dargestellt. Zu diesem Zwecke sind die Koppelglieder 25, 26, 27, 28 mit einem Führungsstift 50 in einer Führungsnut 51 geführt, die mit dem Fundament abgesenkt wird und dabei ein Absenken des Führungsstiftes 50 und damit ein Verschwenken des Kopplungsgliedes 25, 26, 27, 28 um den Gliederbolzen 29, 30 bewirkt. Dadurch wird die Basis 36 des gleichschenkligen Dreieckes 35 schräg gestellt und damit auch die Halterungen 17, 18 aus dem Bereich des Bundes 21, 22 verschwenkt. Eine entsprechende Schwenkbewegung führt eine der Basis gegenüber liegende Spitze 52 des gleichschenkligen Dreiecks 35 aus, in der die Halterungen befestigt sind. (Vergleiche dazu die Figuren 2 - 4 und 2 - 5)

Nach dem Wegschwenken der Halterungen 17, 18 ist unter dem Bund 21, 22 genügend Platz für die Aufnahme der oberen Begrenzung 49, so dass nunmehr die Abstützung 46 mit Hilfe der Traverse 47 soweit angehoben werden kann, bis die obere Begrenzung 49 unter den Bund 21, 22 greift und diesen biegesteif und großflächig abstützt. Gleichzeitig wird die Platte 45 gegenüber dem Boden 44 des Behälters 2 abgesenkt. In entsprechender Weise kann auch die Außenwand 19, 20 des Behälters 2 in der Abstützung 46 abgestützt werden, wenn ein Druckdeckel auf einen entsprechend ausgebildeten oberen Rand des Behälters 2 aufgesetzt werden soll.

Nach dem Aufsetzen des Deckels bzw. Versiegeln des Behälters 2 wird zunächst der Boden 44 des Behälters 2 durch Anheben der Platte 45 wieder abgestützt. Sodann wird durch Anheben des Fundaments 39 auch die Führungsnut angehoben und das Kopplungsglied 25, 26, 27, 28 in seine ursprüngliche Lage verschwenkt, in der die Halterungen 17, 18 unterhalb des Bundes 21, 22 verlaufen und diesen tragen. Anschließend wird die Platte 45 abwärts in die Abstützung 46 hinein verfahren und die Traverse 47 vollkommen abgesenkt und die Platte 45 in die Unterstützung eingefahren, so dass der Behälter 2 nur noch in den Halterungen 17, 18 hängt und gemeinsam mit diesen zu einer nicht dargestellten Ausgabestation der Fördervorrichtung 1 transportiert wird.

Damit stellt sich die Funktion der Fördervorrichtung 1 wie folgt dar: durch entsprechendes Verfahren der Gliederketten 3, 6 bzw. 4, 5 relativ zueinander werden die Halterungen 25, 26, 27, 28 auf eine benötigte Behältergröße eingestellt. Nach dieser Einstellung werden die Behälter 2 auf den Halterungen 17, 18 abgesetzt, so dass sie mit ihrer jeweiligen Einfüllöffnung in den Bereich der Befüllstation 13 transportiert und befüllt werden können.

Sodann wird der befüllte Behälter 2 in die Verdeckelstation 14 gefördert. Dort wird gemeinsam mit der Abstützung 46 die Platte 45 angehoben, bis der Boden 44 des Behälters 2 auf ihr ruht. Anschließend wird das Fundament 39 mit Hilfe des pneumatischen Stempels 40 abgesenkt, so dass die Halterungen 17, 18 verschwenkt werden und den Bund 21, 22 des Behälters 2 nicht mehr tragen. Sodann wird die Platte 45 wird gegenüber dem Boden 44 abgesenkt.

Damit ist der Behälter 2 auf der Abstützung 46 biegesteif gelagert, so dass er mit einem erheblichen Druck zum Aufsetzen eines Druckdeckels oder zum Versiegeln belastet werden kann, ohne dass unerwünschte Verformungen des Behälters 2 eintreten. Nach dem Versiegeln des Behälters 2 wird die Platte 45 wieder angehoben und die Halterungen 17, 18 durch Anheben des Fundaments 39 in Richtung auf den Behälter 2 verschwenkt. Sobald der Behälter 2 wieder auf den Halterungen 17, 18 ruht, kann die Platte 45 über ihren eigenen Antrieb 48 in der Abstützung 46 versenkt werden, so dass sie gemeinsam mit der Abstützung 46 von der Traverse 47 in ihre Ausgangslage gefahren werden kann. Auf den Halterungen 17, 18 abgestützt wird der gefüllte und verschlossenen Behälter 2 in eine nicht dargestellte Ausgabeposition der Förderposition 1 gefördert und dieser entnommen.

## Patentansprüche

1. Verfahren zum Anpassen einer zum Fördern von Behältern (2) vorgesehenen Fördervorrichtung (1) an unterschiedliche Behälterformate, bei dem jedem Behälter (2) mindestens zwei in eine dem Behälter (2) angepasste Position gegeneinander verfahrbare Halterungen (17,18) zugeordnet werden, von denen jede von mindestens einer Gliederkette (3, 4, 5, 6) geführt wird, **dadurch gekennzeichnet, dass** die Halterungen (17, 18) an die Gliederketten (3, 4, 5, 6) durch verschwenkbar gelagerte Kopplungsglieder (25, 28; 26, 27) ab- bzw. angekoppelt werden, die um einen über eine äußere Begrenzung (31, 32) der Gliederketten (3, 4, 5, 6) hinausragenden Gliederbolzen (29, 30) verschwenkt wird und dabei die mit den Kopplungsgliedern (25, 28; 26, 27) jeweils verbundene Halterung (17, 18) vom jeweiligen Behälter (2) weg bzw. zu ihm hin verschwenkt wird.

2. Verfahren nach Anspruch 1, **dadurch gekennzeichnet, dass** der Behälter (2) entlang von zwei ihn begrenzenden Außenwandungen (19,20) von den Halterungen (17,18) abgestützt wird.

3. Verfahren nach Anspruch 1 oder 2, **dadurch gekennzeichnet, dass** der Behälter (2) mit einem seine Einfüllöffnung (23,24) umgebenden Bund (21,22) auf den Halterungen (17,18) abgestützt wird.

4. Verfahren nach einem der Ansprüche 1 bis 3, **dadurch gekennzeichnet, dass** die Halterungen (17,18) zur Anpassung an Abmaße eines jeweils zu transportierenden Behälters (2) in einer vom Behälter (2) innerhalb der Fördervorrichtung (1) eingehaltenen Förderrichtung (11) gegeneinander verfahren werden.

5. Verfahren nach einem der Ansprüche 1 bis 4, **dadurch gekennzeichnet, dass** ein zwischen zwei einander zugeordneten Halterungen (17,18) vorgesehener Abstand dem Maß eines aufzusetzenden Behälters (2) angepasst wird.

6. Verfahren nach einem der Ansprüche 1 bis 5, **dadurch gekennzeichnet, dass** jede der einander zugeordneten Halterungen (17,18) von mindestens einem Fördermittel geführt wird, von denen die Behälter (2) durch die Fördervorrichtung (1) transportiert werden.

7. Verfahren nach Anspruch 6, **dadurch gekennzeichnet, dass** der zwischen den Halterungen (17,18) vorgesehene Abstand durch Verfahren der Fördermittel relativ zueinander verändert wird.

8. Verfahren nach Anspruch 7, **dadurch gekennzeichnet, dass** von den beiden einem Behälter (2) zugeordneten Halterungen (17, 18) die eine um eine bestimmte Strecke in Förderrichtung (11) und die andere um die gleiche Strecke in eine der Förderrichtung (11) entgegengesetzte Richtung (12) von einem bestimmten Ausgangspunkt gefördert wird, so dass dieser für alle einstellbaren Behälterformate erhalten bleibt und der Abstand zwischen den Halterungen (17, 18) für den Transport eines bestimmten Behältertyps unverändert ist.

9. Verfahren nach einem der Ansprüche 6 bis 8, **dadurch gekennzeichnet, dass** der Behälter (2) von ihm zugeordneten Halterungen (17,18)durch Verschwenken der Halterungen (17,18) abgekoppelt wird.

10. Verfahren nach Anspruch 9, **dadurch gekennzeichnet, dass** der Behälter (2) vor dem Abkoppeln von den Halterungen (17,18) auf einer Unterlage abgestellt wird.

11. Verfahren nach Anspruch 10,' **dadurch gekennzeichnet, dass** der Behälter (2) vor dem Wegschwenken der Halterung (17,18) abgestützt wird.

12. Verfahren nach Anspruch 11, **dadurch gekennzeichnet, dass** der Behälter (2) mit einer in Richtung auf seinen Boden (44) verfahrbaren Platte (45) abgestützt wird, auf der der Boden (44) gelagert wird.

13. Verfahren nach einem der Ansprüche 10 bis 12, **dadurch gekennzeichnet, dass** der Behälter (2) nach Wegschwenken der Halterungen (17,18) in einer ihn umgebenden biegesteifen Abstützung (46) abgestützt wird, deren obere Begrenzung (49) bis zu dem die Einfüllöffnung (23,24) des Behälters (2) umgebenden Bund (21,22) angehoben wird.

14. Verfahren nach Anspruch 12 oder 13, **dadurch gekennzeichnet, dass** die Platte (45) innerhalb der Abstützung (46) in Richtung auf den Boden (44) des Behälters (2) verfahren wird.

15. Verfahren nach einem der Ansprüche 9 bis 14, **dadurch gekennzeichnet, dass** der Behälter (2) vor dem Verschwenken der Halterungen (17,18) von der Platte (45) angehoben wird.

16. Verfahren nach Anspruch 15, **dadurch gekennzeichnet, dass** die in den Kopplungsgliedern (25,26,27,28) geführten Halterungen (17,18 durch Verschwenken der Kopplungsglieder (25, 26, 27, 28) abgesenkt werden.

17. Verfahren nach Anspruch 16, **dadurch gekennzeichnet, dass** die Kopplungsglieder (25, 26, 27, 28) beim Übergang eines sie steuernden Führungsstiftes (50) auf eine abgesenkte Führungsebene verschwenkt werden.

18. Vorrichtung zum Anpassen einer zum Befördern von Behältern (2) vorgesehenen Fördervorrichtung (1) an unterschiedliche Behälterformate mit mindestens zwei unabhängig voneinander verfahrbaren Halterungen (17, 18), die in ihrer Lage einem zu transportierenden Behälter (2) entsprechend von mindestens einer mit je einer Halterung (17, 18) verbundenen Gliederkette (3, 6; 4, 5) zueinander positionierbar sind, **dadurch gekennzeichnet, dass** jede Halterung (17, 18) über jeweils ein verschwenkbar gelagertes Kopplungsglied (25, 28; 26, 27) mit jeweils einer ihr zugeordneten Gliederkette (3, 6; 4, 5) verbunden ist, auf deren äußerer Begrenzung (31, 32) ein Gliederbolzen (29, 30) herausragt, auf dem das Kopplungsglied (25, 26, 27, 28) von einer die Halterung (17, 18) an den Behälter (2) ankoppelnden Stellung in eine abkoppelnde Stellung und aus dieser wieder in die ankoppelnde Stellung verschwenkbar gelagert ist.

19. Vorrichtung nach Anspruch 18, **dadurch gekennzeichnet, dass** die Halterungen (17,.18) etwa parallel zueinander entlang von zwei den Behälter (2) begrenzenden Außenwandungen (19,20) verlaufen.

20. Vorrichtung nach Anspruch 18 oder 19, **dadurch gekennzeichnet, dass** die Halterungen (17,18) unterhalb eines Bundes (21,22) verlaufen, der die Außenwandungen(19,20) des Behälters im Bereich seiner Einfüllöffnung (23,24) überkragen.

21. Vorrichtung nach einem der Ansprüche 18 bis 20, **dadurch gekennzeichnet, dass** zwischen einander zugeordneten Halterungen (17,18) ein den Abmessungen eines jeweils zu transportierenden Behälters (2) veränderbarer Abstand vorgesehen ist.

22. Vorrichtung nach Anspruch 21, **dadurch gekennzeichnet, dass** der Behälter (2) in einer von den Halterungen (17,18) abgehobenen Lage von diesen abkoppelbar ist.

23. Vorrichtung nach Anspruch 18 bis 22, **dadurch gekennzeichnet, dass** das Kopplungsglied (25,26,27,28) verschwenkbar auf einem Gliederbolzen (29,30) gelagert ist, der über eine äußere Begrenzung (31,32) der Gliederkette (3.4,5,6) einseitig hinausragt, und auf zwei beidseitig des Gliederbolzens (29,30) drehbar gelagerten Rollen (33) geführt ist, die im Bereich einer die Halterung (17,18) von dem Behälter (2) abkoppelnden Position über eine Ebene (53) geführt werden, die eine das Kopplungsglied (25,26,27,28) verschwenkende Absenkung aufweist, in der die Halterungen (17,18) vom Behälter (2) abgeschwenkt sind.

## Claims

1. A method for adjusting a conveying apparatus (1) provided for conveying containers (2) to different formats of containers, in which each container (2) is associated with at least two fixing devices (17, 18) which can be moved against one another to a position adjusted to the container (2) and of which each is guided by at least one link chain (3, 4, 5, 6), **characterized in that** the fixing devices (17, 18) are coupled to and uncoupled from the link chains (3, 4, 5, 6) by pivotably held coupling members (25, 28; 26, 27) which are pivoted about a link pin (29, 30) protruding beyond an outer boundary (31, 32) of the link chains (3, 4, 5, 6) and, in this process, the fixing device (17, 18) respectively connected with the coupling members (25, 28; 26, 27) is pivoted away from or towards the respective container (2).

2. A method according to claim 1, **characterized in that** the container (2) is supported by the fixing devices (17, 18) along two outside walls (19, 20) which delimit the same.

3. A method according to claim 1 or 2, **characterized in that** the container (2) is supported on the fixing devices (17, 18) with a collar (21, 22) enclosing its filling opening (23, 24).

4. A method according to one of the claims 1 to 3, **characterized in that** the fixing devices (17, 18) are displaced with respect to each other for adjustment to dimensions of a container (2) to be transported in a direction of conveyance (1) maintained by the container (2) within the conveying apparatus (1).

5. A method according to one of the claims 1 to 4, **characterized in that** a distance provided between two mutually associated fixing devices (17, 18) is adjusted to the size of a container (2) to be placed thereon.

6. A method according to one of the claims 1 to 5, **characterized in that** each of the mutually associated fixing devices (17, 18) is guided by at least one conveying means, by which the containers (2) are conveyed by the conveying apparatus (1).

7. A method according to claim 6, **characterized in that** the distance provided between the fixing devices (17, 18) is changed by displacing the conveying means relative to one another.

8. A method according to claim 7, **characterized in that** of the two fixing devices (17, 18) associated with one container (2) the one is conveyed over a certain distance in the conveying direction (11) and the other over the same distance in a direction (12) opposite of the conveying direction (11) from a specific starting point, so that the same is maintained for all adjustable container formats and the distance between the fixing devices (17, 18) remains unchanged for the transport of a specific type of container.

9. A method according to one of the claims 6 to 8, **characterized in that** the container (2) is uncoupled from fixing devices (17, 18) associated with the same by pivoting the fixing devices (17, 18).

10. A method according to claim 9, **characterized in that** the container (2) is placed on a base prior to uncoupling from the fixing devices (17, 18).

11. A method according to claim 10, **characterized in that** the container (2) is supported prior to being pivoted away from the fixing device (17, 18).

12. A method according to claim 11, **characterized in that** the container (2) is supported with a plate (45) which is displaceable in the direction towards its floor (44) and on which the floor (44) is held.

13. A method according to one of the claims 10 to 12, **characterized in that** the container (2) is supported in a deflection-resistant support (46) enclosing the same after the fixing devices (17, 18) have been pivoted away, with its upper boundary (49) being lifted up to the collar (21, 22) enclosing the filling opening (23, 24) of the container (2) .

14. A method according to claim 12 or 13, **characterized in that** the plate (45) is displaced within the support (46) in the direction towards the floor (44) of the container (2).

15. A method according to one of the claims 9 to 14, **characterized in that** the container (2) is lifted off the plate (45) prior to the pivoting of the fixing devices (17, 18).

16. A method according to claim 15, **characterized in that** the fixing devices (17, 18) guided in the coupling members (25, 26, 27, 28) are lowered by pivoting the coupling members (25, 26, 27, 28).

17. A method according to claim 16, **characterized in that** the coupling members (25, 26, 27, 28) are pivoted during the transfer to a lowered guide plane of a guide pin (50) which control the same.

18. An apparatus for adjusting a conveying apparatus (1) provided for conveying containers (2) to different container formats, comprising at least two fixing devices (17, 18) which are displaceable independent from one another and which can be positioned with respect to one another in their position according to a container (2) to be transported by at least one link chain (3, 6; 4, 5) connected with a fixing device (17, 18) each, **characterized in that** each fixing device (17, 18) is connected via one coupling member (25, 28; 26, 27) each which is pivotably held to one link chain (3, 6; 4, 5) each which is associated with the same, on the outer boundary of the same (31, 32) there protrudes a link pin (29, 30) on which the coupling member (25, 26) is pivotably held from a position coupling the fixing device (17, 18) to the container to a uncoupling position and from the same back to the coupling position again.

19. An apparatus according to claim 18, **characterized in that** the fixing devices (17, 18) extend approximately parallel with respect to each other along two outside walls (19, 20) which delimit the container (2).

20. An apparatus according to claim 18 or 19, **characterized in that** the fixing devices (17, 18) extend beneath a collar (21, 22) which protrude beyond the outside walls (19, 20) of the container in the region of its filling opening (23, 24).

21. An apparatus according to one of the claims 18 to 20, **characterized in that** a distance which can be changed according to the dimensions of a container (2) to be respectively conveyed is provided between mutually associated fixing devices (17, 18).

22. An apparatus according to claim 21, **characterized in that** the container (2) can be uncoupled from the fixing devices (17, 18) in a position lifted off from the same.

23. An apparatus according to claim 18 to 22, **characterized in that** the coupling member (25, 26, 27, 28) is held to be pivotable on a link pin (29, 30) which protrudes on one side over an outer boundary (31, 32) of the link chain (3, 4, 5, 6) and is guided on two rollers (33) held rotatably on either side of the link pin (29, 30), which rollers are guided over a plane (53) in the region of a position uncoupling the fixing device (17, 18) from the container (2), which plane comprises a depression pivoting the coupling member (25, 26, 27, 28) in which the fixing devices (17, 18) are pivoted down from the container (2).

## Revendications

1. Procédé pour adapter un dispositif de transport (1) destiné au transport de récipients (2) à différents formats de récipients, dans lequel sont associées à chaque récipient (2) au moins deux fixations (17, 18) déplaçables l'une vers l'autre dans une position adaptée au récipient (2), dont chacune est guidée par au moins une chaîne à maillons (3, 4, 5, 6), **caractérisé en ce que** les fixations (17, 18) sont couplées et découplées sur les chaînes à maillons (3, 4, 5, 6) par des éléments de couplage (25, 28 ; 26, 27) supportés de façon basculante, qui basculent autour d'un boulon de maillon (29, 30) dépassant au-delà d'une délimitation extérieure (31, 32) de la chaînes à maillons (3, 4, 5, 6) et la fixation (17, 18) reliée aux éléments de couplage (25, 28 ; 26, 27) bascule ainsi pour s'écarter ou se rapprocher du récipient en question (2).

2. Procédé selon la revendication 1, **caractérisé en ce que** le récipient (2) est soutenu le long de deux parois latérales (19, 20) qui le délimitent par les fixations (17, 18).

3. Procédé selon la revendication 1 ou 2, **caractérisé en ce que** le récipient (2) est soutenu sur les fixations (17, 18) par un collet (21, 22) qui entoure son ouverture de remplissage (23,24).

4. Procédé selon l'une des revendications 1 à 3, **caractérisé en ce que** les fixations (17, 18) sont déplacées l'une vers l'autre pour s'adapter aux dimensions d'un récipient (2) à transporter dans un sens de transport (11) suivi par le récipient (2) dans le dispositif de transport (1).

5. Procédé selon l'une des revendications 1 à 4, **caractérisé en ce qu'**une distance prévue entre deux fixations (17, 18) associées l'une à l'autre est adaptée à la dimension d'un récipient (2) à mettre en place.

6. Procédé selon l'une des revendications 1 à 5, **caractérisé en ce que** chacune des fixations (17, 18) associées l'une à l'autre est guidée par au moins un moyen de transport par lequel les récipients (2) sont transportés à travers le dispositif de transport (1).

7. Procédé selon la revendication 6, **caractérisé en ce que** la distance prévue entre les fixations (17, 18) est modifiée par le déplacement des moyens de transport l'un vers l'autre.

8. Procédé selon la revendication 7, **caractérisé en ce que** les deux fixations (17, 18) associées à un récipient (2) sont transportées l'une sur une certaine distance dans le sens de transport (11) et l'autre de la même distance dans un sens (12) opposé au sens de transport (11) à partir d'un certains point de départ, de telle sorte que celui-ci est conservé pour tous les formats de récipients réglables et que la distance entre les fixations (17, 18) est inchangée pour le transport d'un certain type de récipient.

9. Procédé selon l'une des revendications 6 à 8, **caractérisé en ce que** le récipient (2) est découplé des fixations (17, 18) qui lui sont associées par le basculement des fixations (17, 18).

10. Procédé selon la revendication 9, **caractérisé en ce que** le récipient (2) est posé sur un support avant d'être découplé des fixations (17, 18).

11. Procédé selon la revendication 10, **caractérisé en ce que** le récipient (2) est soutenu avant que la fixation (17, 18) s'en écarte.

12. Procédé selon la revendication 11, **caractérisé en ce que** le récipient (2) est soutenu par une plaque (45) mobile en direction de son fond (44), sur laquelle le fond (44) est supporté.

13. Procédé selon l'une des revendications 10 à 12, **caractérisé en ce que** le récipient (2) est soutenu après que la fixation (17, 18) s'en est écartée dans un appui (46) rigide en flexion qui l'entoure et dont la délimitation supérieure (49) est levée jusqu'au collet (21, 22) entourant l'ouverture de remplissage (23, 24) du récipient (2).

14. Procédé selon la revendication 12 ou 13, **caractérisé en ce que** la plaque (45) est déplacée à l'intérieur de l'appui (46) en direction du fond (44) du récipient (2).

15. Procédé selon l'une des revendications 9 à 14, **caractérisé en ce que** le récipient (2) est soulevé par la plaque (45) avant que les fixations (17, 18) s'en écartent.

16. Procédé selon la revendication 15, **caractérisé en ce que** les fixations (17, 18) guidées dans les éléments de couplage (25, 26, 27, 28) sont abaissées par le basculement des éléments de couplage (25, 26, 27, 28).

17. Procédé selon la revendication 16, **caractérisé en ce que** les éléments de couplage (25, 26, 27, 28) sont basculés lors du passage d'une tige de guidage (50) qui les contrôle dans un plan de guidage abaissé.

18. Dispositif pour adapter un dispositif de transport (1) destiné au transport de récipients (2) à différents formats de récipients, avec au moins deux fixations (17, 18) mobiles indépendamment l'une de l'autre, qui peuvent être positionnées l'une par rapport à l'autre en fonction d'un récipient (2) à transporter par au moins une chaîne à maillons (3, 4, 5, 6) reliée à une fixation (17, 18) à la fois, **caractérisé en ce que** chaque fixation (17, 18) possède un élément de couplage (25, 28 ; 26, 27) supporté de manière basculante auquel est reliée une chaîne à maillons (3, 6 ; 4, 5), dont la délimitation extérieure (31, 32) porte en saillie un boulon de maillon (29, 30) sur lequel l'élément de couplage (25, 26, 27, 28) est supporté de façon à pouvoir basculer d'une position couplant la fixation (17, 18) au récipient (2) à une position de découplage et revenir de celle-ci à la position de couplage.

19. Dispositif selon la revendication 18, **caractérisé en ce que** les fixations (17, 18) sont approximativement parallèles l'une à l'autre le long de deux parois extérieures (19, 20) délimitant le récipient (2).

20. Dispositif selon la revendication 18 ou 19, **caractérisé en ce que** les fixations (17, 18) passent en dessous d'un collet (21, 22) qui borde les parois extérieures (19, 20) du récipient au niveau de son ouverture de remplissage (23, 24).

21. Dispositif selon l'une des revendications 18 à 20, **caractérisé en ce qu'**il est prévu entre les fixations (17, 18) associées l'une à l'autre une distance modifiable en fonction des dimensions de chaque récipient (2) à transporter.

22. Dispositif selon la revendication 21, **caractérisé en ce que** le récipient (2) peut être découplé des fixations (17, 18) dans une position soulevée par celles-ci.

23. Dispositif selon la revendication 18 à 22, **caractérisé en ce que** l'élément de couplage (25, 26, 27, 28) est supporté avec possibilité de basculement sur un boulon de maillon (29, 30) qui dépasse d'un côté d'une délimitation extérieure (31, 32) de la chaîne à maillons 3,4,5,6 et est guidé sur deux galets (33) supportés avec possibilité de rotation des deux côtés du boulon de maillon (29, 30), qui sont guidés au niveau d'une position découplant la fixation (17, 18) du récipient (2), en passant dans un plan (53) qui présente une descente faisant basculer l'élément de couplage (25, 26, 27, 28), dans laquelle les fixations (17, 18) sont écartées du récipient (2) par basculement.
